**Europäisches Patentamt**

**European Patent Office**

**Office européen des brevets**

(19)

(11) Veröffentlichungsnummer: **0 373 433**

**A2**

(12) **EUROPÄISCHE PATENTANMELDUNG**

(21) Anmeldenummer: **89122165.7**

(22) Anmeldetag: **01.12.89**

(51) Int. Cl.5: **C08F 2/10, C08F 20/06, C11D 3/37**

(30) Priorität: **15.12.88 DE 3842185**

(43) Veröffentlichungstag der Anmeldung:
**20.06.90 Patentblatt 90/25**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Hennig, Karl**
**Beethovenstrasse 26**
**D-6717 Hessheim(DE)**
Erfinder: **Hartmann, Heinrich, Dr.**
**Weinheimer Strasse 46**
**D-6703 Limburgerhof(DE)**
Erfinder: **Raubenheimer, Hans-Jürgen**
**Benzstrasse 6**
**D-6834 Ketsch(DE)**
Erfinder: **Fischer, Hermann, Dr.**
**Hardenburgstrasse 33**
**D-6703 Limburgerhof(DE)**
Erfinder: **Denzinger, Walter**
**Wormser Landstrasse 65**
**D-6720 Speyer(DE)**

(54) **Verfahren zur Herstellung von pulverförmigen Polymerisaten der Acrylsäure und Methacrylsäure und ihre Verwendung.**

(57) Verfahren zur Herstellung von pulverförmigen Polymerisaten der Acrylsäure und Methacrylsäure durch Polymerisieren von (a) 100 bis 70 Gew.% Acrylsäure, Methacrylsäure oder Mischungen aus Acrylsäure und Methacrylsäure und (b) 0 bis 30 Gew.% Vinylsulfonsäure oder deren Alkalisalzen in einwertigen $C_1$- bis $C_8$-Alkoholen, Wasser oder Mischungen dieser Lösemittel in einem Pulverbett in Gegenwart von Polymerisationsinitiatoren und - jeweils bezogen auf die bei der Polymerisation eingesetzten Monomeren, 0,05 bis 10 Mol.% einer Thiocarbonsäure und/oder eines Mercaptoalkohols und 0,05 bis 10 Mol.% Propionsäure oder Ameisensäure als Regler unter Aufrechterhaltung des Pulverzustands während der Polymerisation, Abführen der Polymerisationswärme durch Abdestillieren der Lösemittel und Umwälzung der Reaktionsmasse.

Xerox Copy Centre

# Verfahren zur Herstellung von pulverförmigen Polymerisaten der Acrylsäure und Methacrylsäure und ihre Verwendung

Aus der US-PS 4 135 043 ist ein Verfahren zur Herstellung von pulverförmigen wasserlöslichen Polymerisaten bekannt, bei dem man wasserlösliche ethylenisch ungesättigte Monomere in einem Pulverbett in Gegenwart üblicher Polymerisationsinitiatoren und Wasser als Hilfsflüssigkeit unter Aufrechterhaltung des Pulverzustands, Abführen der Polymerisationswärme durch Abdestillieren von Wasser und Umwälzung der Reaktionsmasse polymerisiert.

AUS der CA-PS 1 194 648 ist ebenfalls ein Verfahren zur Herstellung von pulverförmigen Polymerisaten durch Polymerisieren der Monomeren in einem Pulverbett bekannt, bei dem man zum Abführen der Polymerisationswärme inerte organische Lösungsmittel verwendet, die ein Fällungsmittel für die Polymerisate sind. Nach den bekannten Verfahren werden Polymerisate eines relativ hohen Molekulargewichts mit breiter Molekulargewichtsverteilung erhalten.

Aus der US-PS 3 898 037 sind Copolymerisate aus (Meth)acrylamidoalkylsulfonsäuren und Acrylsäure oder Methacrylsäure bekannt, die in geringen Mengen (bis zu etwa 100 ppm) als Korrosionsinhibitor verwendet werden. Die Copolymerisate können durch Copolymerisieren der Monomermischungen in Lösemittelgemischen aus Wasser und Isopropanol hergestellt werden.

Aus der US-PS 4 301 266 ist ein Verfahren zur Herstellung von Polymerisaten der Acrylsäure oder Methacrylsäure bzw. deren Gemischen bekannt, bei dem man die Monomeren in Isopropanol oder Mischungen aus Wasser und Isopropanol, die mindestens 40 Gew.% Isopropanol enthalten, mit Hilfe radikalischer Polymerisationsinitiatoren bei Temperaturen von 120 bis 200°C unter Druck polymerisiert. Die Polymerisate werden als Dispergiermittel zur Herstellung von wäßrigen Pigmentanschlämmungen für Papierstreichmassen verwendet. Es besteht jedoch auch ein Bedarf an pulverförmigen Dispergiermitteln und Mahlhilfsmitteln. Pulverförmige Produkte können jedoch nicht in wirtschaftlicher Weise aus nach bekannten Verfahren erhaltenen Polymerisatlösungen hergestellt werden.

Aus der EP-PS 0 113 048 ist ein Verfahren zur Herstellung von pulverförmigen Polymerisaten auf Basis von wasserlöslichen ethylenisch ungesättigten Monomeren durch Polymerisieren von Säuregruppen enthaltenden Monomeren bekannt, die in Wasser oder Wasser-Isopropanol-Mischungen gelöst sind, in einem Pulverbett in Gegenwart üblicher Polymerisationsinitiatoren unter Aufrechterhaltung des Pulverzustandes, Abführen der Polymerisationswärme durch Abdestillieren der Lösemittel und Umwälzung der Reaktionsmasse, wobei 40 bis 95 % der Säuregruppen der Monomeren neutralisiert sind und die Polymerisation in Gegenwart von 0,05 bis 10 Mol.%, bezogen auf die Monomeren, einer Thiocarbonsäure oder 2-Mercaptoethanol als Regler durchgeführt wird. Die so erhaltenen Homo- und Copolymerisate werden als Mahlhilfsmittel und Dispergiermittel für Pigmente und als Inkrustierungs- und Vergrauungsinhibitoren für Waschmittel verwendet.

Der vorliegenden Erfindung liegt die Aufgabe zugrunde, ein Verfahren zur Herstellung von pulverförmigen Polymerisaten der Acrylsäure oder Methacrylsäure zur Verfügung zu stellen, bei dem Polymerisate anfallen, die ein niedrigeres Molekulargewicht und eine engere Molekulargewichtsverteilung aufweisen als diejenigen Polymerisate, die nach den bekannten Verfahren zur Herstellung pulverförmiger Produkte erhältlich sind.

Die Aufgabe wird erfindungsgemäß gelöst mit einem Verfahren zur Herstellung von pulverförmigen Polymerisaten der Acrylsäure und Methacrylsäure durch Polymerisieren von

(a) 100 bis 70 Gew.% Acrylsäure, Methacrylsäure oder Mischungen aus Acrylsäure und Methacrylsäure und

(b) 0 bis 30 Gew.% einer Verbindung der Formel $CH_2 = CH\text{-}SO_3Me$, in der $Me = H$, Na, K, $NH_4$ bedeutet, in einwertigen $C_1$- bis $C_8$-Alkoholen, Wasser oder Mischungen dieser Lösemittel in einem Pulverbett in Gegenwart von Polymerisationsinitiatoren und Reglern Aufrechterhaltung des Pulverzustands während der Polymerisation, Abführen der Polymerisationswärme durch Abdestillieren der Lösemittel und Umwälzung der Reaktionsmasse, wenn man als Regler, jeweils bezogen auf die bei der Polymerisation eingesetzten Monomeren, 0,5 bis 10 Mol.% einer Thiocarbonsäure und/oder eines Mercaptoalkohols und 0,05 bis 10 Mol.% Propionsäure und/oder Ameisensäure einsetzt.

Thiocarbonsäuren oder Mercaptoalkohole ergeben in Gegenwart von Propionsäure oder Ameisensäure bezüglich ihrer Wirkung als Polymerisationsregler einen synergistischen Effekt. Weder mit Propionsäure oder Ameisensäure allein oder mit den starken Reglern, wie Thiocarbonsäuren oder Mercaptoalkoholen allein, ist es möglich, Polymerisate der Acrylsäure oder Methacrylsäure mit so niedrigen Molekulargewichten zu erhalten, wie mit einer Kombination von Thiocarbonsäure oder Mercaptoalkohol mit Propionsäure, Ameisensäure oder deren Mischungen. Der Einsatz der Reglermischungen bei der Polymerisation führt außerdem zu Polymerisaten der Acrylsäure oder Methacrylsäure, die, verglichen mit den nach üblicher Herstellweise erhaltenen Polymerisaten, eine engere Molekulargewichtsverteilung aufweisen und eine hellere Farbe besitzen.

Nach dem erfindungsgemäßen Verfahren werden niedrigmolekulare Homo- oder Copolymerisate der Acrylsäure oder Methacrylsäure hergestellt. Für die Herstellung von Homopolymerisaten unterwirft man entweder Acrylsäure oder Methacrylsäure der Polymerisation. Acrylsäure und Methacrylsäure können jedoch auch in beliebigem Verhältnis copolymerisiert werden. Acrylsäure oder Methacrylsäure können außerdem auch mit den Monomeren der Gruppe (b) copolymerisiert werden. Bei den Monomeren der Gruppe (b) handelt es sich um Vinylsulfonsäure oder deren Alkali- oder Ammoniumsalze. Von den Salzen verwendet man vorzugsweise die Natrium-, Kalium- und Ammoniumsalze.

Die Polymerisation erfolgt nach den eingangs beschriebenen Verfahren in einem Pulverbett. Dazu stellt man zunächst eine Lösung der Monomeren in einwertigen $C_1$- bis $C_8$-Alkoholen, Wasser oder Mischungen aus einwertigen $C_1$- bis $C_8$-Alkoholen und Wasser her. Lösemittel dieser Art sind beispielsweise Methanol, Ethanol, Isopropanol, n-Propanol, n-, iso- und tert.Butanol, n-Hexanol und Cyclohexanol sowie Mischungen der genannten Alkohole. Diese Mischungen können noch zusätzlich Wasser enthalten oder die einzelnen Alkohole werden in Mischung mit Wasser angewendet, z.B. Mischungen aus Methanol und Wasser oder Isopropanol und Wasser. Die Konzentration der Monomeren im Lösemittel beträgt 30 bis 70 Gew.%. Für die Polymerisation in einem Pulverbett ist es erforderlich, beim Start der Polymerisation ein Pulver vorzulegen. Hierfür kann man prinzipiell jedes beliebige inerte pulverförmige Material verwenden, vorzugsweise legt man jedoch ein pulverförmiges Polymerisat vor, dessen Zusammensetzung dem Polymerisat entspricht, das hergestellt werden soll. Die pulverförmigen Polymerisate, die zunächst dem Reaktor vorgelegt werden, können nach bekannten anderen Verfahren hergestellt worden sein, z.B. durch Lösungspolymerisation von Acrylsäure in Isopropanol und Entfernen des Lösemittels nach Beendigung der Polymerisation. Das im Reaktor vorgelegte pulverförmige Polymerisat hat einen Teilchendurchmesser von 0,1 bis 3 mm.

Die Polymerisation erfolgt in Gegenwart üblicher Polymerisationsinitiatoren. Vorzugsweise verwendet man solche Polymerisatiosinitiatoren, die in Wasser löslich sind oder sich in Wasser emulgieren lassen, z.B. Wasserstoffperoxid, Natrium-, Kalium- oder Ammoniumperoxidisulfat. Außerdem eignen sich als Initiatoren die bekannten Redoxkatalysatorsysteme wie Metallsalze und Peroxide, sowie wasserlösliche Azoverbindungen, wie 2,2´-

Azobis-(2-amidinopropan)-hydrochlorid sowie Ketonperoxide, z.B. Acetyl acetonperoxid. Bezogen auf die bei der Polymerisation eingesetzten Monomeren verwendet man 1 bis 20, vorzugsweise 4 bis 10 Gew.% eines Initiators. Vorzugsweise führt man die Polymerisation in Gegenwart von Wasserstoffperoxid oder wasserlöslichen Azoverbindungen als radikalischen Polymerisationsinitiator durch.

Die Polymerisation wird erfindungsgemäß in Gegenwart von Reglermischungen durchgeführt. Die Reglermischungen enthalten einen starken Regler, z.B. Thiocarbonsäuren, Mercaptoalkohole oder Mischungen aus Thiocarbonsäuren und Mercaptoalkoholen und als andere Komponente einen schwachen Polymerisationsregler, der aus der Gruppe Propionsäure und Ameisensäure sowie Mischungen aus Propionsäure und Ameisensäure ausgewählt ist. Überraschenderweise bewirkt die Kombination der genannten Regler eine solche Erniedrigung des Molekulargewichts von Polymerisaten der Acrylsäure und Methacrylsäure, die beispielsweise durch eine Erhöhung der Menge des starken Polymerisationsreglers, z.B. Thioglykolsäure oder 2-Mercaptoethanol, allein nicht erreichbar ist. Geeignete Thiocarbonsäuren sind beispielsweise Thioglykolsäure, Thiomilchsäure, 3-Mercaptopropionsäure, 2-Mercaptopropionsäure, 2-Mercaptobuttersäure, 3-Mercaptobuttersäure und 3-Mercaptobernsteinsäure. Im allgemeinen eignen sich Thiocarbonsäuren, die 2 bis 5 Kohlenstoffatome haben. Geeignete Mercaptoalkohole haben 2 bis 4 Kohlenstoffatome, z.B. 2-Mercaptoethanol, 3-Mercaptopropanol, 2-Mercaptopropanol, Mercaptobutanole und 3-Mercapto-1,2-propandiol.

Bezogen auf die bei der Polymerisation eingesetzten Monomeren verwendet man 0,05 bis 10 Mol.% einer Thiocarbonsäure und/oder eines Mercaptoalkohols und 0,05 bis 10 Mol.% Propionsäure und/oder Ameisensäure. Das Verhältnis der starken zu den schwachen Reglern beträgt vorzugsweise 2:1.

Die Polymerisation der Monomeren kann in einem weiten Temperaturbereich durchgeführt werden. Wesentliches Merkmal der vorliegenden Polymerisation ist, daß der Pulverzustand während der Polymerisation aufrechterhalten wird, d.h. die Temperatur bei der Polymerisation sollte mindestens 10°C unterhalb des Schmelzpunkts bzw. des beginnenden Erweichungsbereichs des Polymerisates liegen, so daß die einzelnen Polymerteilchen nicht miteinander verkleben. Die Temperatur muß jedoch so hoch sein, daß das jeweils verwendete Lösemittel oder Lösemittelgemisch aus der Polymerisationszone verdampft. Die Polymerisation kann bei Normaldruck, bei vermindertem Druck oder auch unter erhöhtem Druck, z.B. bis zu 25 bar durchgeführt werden. Vorzugsweise erfolgt die Polymerisation bei Normaldruck in dem Temperaturbereich von 115 bis 180, vorzugsweise 120 bis 150 °C. Sie kann diskontinuierlich oder kontinuierlich ablaufen, wobei man als Behälter für die Reak tionszone in beiden Fällen Rührkessel oder dynamische Mischer aller Art verwenden kann. Bei kontinuierlichem Betrieb wird die Monomerlösung kontinuierlich oder in Intervallen der Reaktionszone zugeführt und das Polymerisat kontinuierlich oder ebenfalls in Intervallen mit Hilfe einer geeigneten Austragsvorrichtung, z.B. Schnecke, daraus entfernt. Pro Zeiteinheit wird dabei etwa die gleiche Menge an Polymerisat entfernt, wie an Monomeren in die Reaktionszone eingebracht wird. Als Polymerisationsvorrichtungen kommen beispielsweise Kessel, Rührautoklaven, Kombinationen von Rührkesseln mit nachgeschaltetem Strömungsrohr oder Kaskaden von Rührkesseln oder Rührautoklaven in Betracht.

Zur Polymerisation wird die partiell oder vollständig neutralisierte Monomerlösung bzw. Monomeremulsion in feiner Verteilung auf das vorgelegte Pulver in der Polymerisationszone aufgebracht oder direkt in das Pulverbett eingesprüht. Dieser Verfahrensschritt geschieht in der Regel durch Versprühen der Monomerlösung mit Hilfe einer oder mehrerer Düsen. Eine besonders feine Zerteilung der Monomerlösung wird mit Hilfe von Mehrstoffdüsen erreicht, z.B. Zweistoff- oder Dreistoffdüsen, wenn man durch eine Düsenöffnung einen Inertgasstrom führt, so daß die durch die andere Düsenöffnung einer Zweistoffdüse geförderte Monomerlösung vom Inertgasstrom, z.B. Stickstoff, fein zerteilt wird. Die Düse taucht dabei entweder in das Pulverbett ein oder die Monomeren werden auf das Pulverbett aufgesprüht. Während der Polymerisation ist für eine ausreichende Umwälzung der Reaktionsmasse zu sorgen. Vorzugsweise wird dies dadurch bewerkstelligt, daß man die Mischung rührt. Die bei der Polymerisation der Monomeren sowie durch Umwälzung des Pulvers entstehende Wärme werden durch kontinuierliches Verdampfen des Lösemittels bzw. Lösemittelgemisches aus der Reaktionszone entfernt. In einer bevorzugten Ausführungsform des erfindungsgemäßen Verfahrens neutralisiert man die Säuregruppen der Monomeren zu 40 bis 95 % Alkalimetallbasen oder Ammoniak während der Polymerisation. In diesem Fall ist es selbstverständlich erforderlich, auch die bei der Neutralisation entstehende Wärme aus dem polymerisierenden System zu entfernen. Hierzu wählt man die Konzentration der Monomeren im Lösemittel so aus, daß die freigesetzte Wärme gerade dazu ausreicht, um die Lösemittel unter den herrschenden Reaktionsbedingungen durch Verdampfen vollständig aus der Polymerisationszone zu entfernen, so daß der Pulverzustand während der Polymerisation aufrechterhalten bleibt. Die Konzentration der Monomeren in den Lösemitteln liegt daher vorzugsweise in dem Bereich von 45 bis 60 Gew.%.

Die nach dem erfindungsgemäßen Verfahren erhältlichen Homopolymerisate oder Copolymerisate der Acrylsäure oder Methacrylsäure haben K-Werte von bis 40 (bestimmt nach H. Fikentscher in Wasser bei einer Polymerkonzen tration von 1 Gew.% und einer Temperatur von 25 °C bei pH 7,0 als Natriumsalz). Die Polymerisate werden als Mahlhilfsmittel und/oder Dispergiermittel zur Herstellung wäßriger Anschlämmungen von Pigmenten für Papierstreichmassen verwendet. Die Einsatzmengen der Copolymerisate betragen, bezogen auf Pigment, 0,05 bis 1,0, vorzugsweise 0,3 bis 0,6 Gew.%. Als Pigmente zur Herstellung von Papierstreichmassen kommen beispielsweise Kreide, Clay, Satinweiß, Titandioxid, Kaolin und Dolomit in Betracht. Aus diesen Pigmenten werden hochkonzentrierte wäßrige Anschlämmungen hergestellt, die in Abhängigkeit von der Art des Pigments und dessen Teilchengröße Feststoffgehalte z.T. bis zu 90 Gew.% haben können. Die Feststoffgehalte von Clay-Anschlämmungen betragen zwischen 65 und 70 Gew.%, bei Kreide beträgt der Feststoffgehalt der wäßrigen Anschlämmungen 75 bis 85 Gew.%, teilweise sogar bis zu 90 Gew.%. Die wäßrigen Anschlämmungen der Pigmente werden vorzugsweise dadurch hergestellt, daß man das Dispergiermittel den Pigmenten bereits beim Mahlen zusetzt. Dieser Mahlvorgang wird bekanntlich in wäßrigem Medium durchgeführt. Zum Mahlen oder Dispergieren benötigt man im allgemeinen 0,1 bis 0,6 Gew.% der Homo- oder Copolymerisate der Acrylsäure und/oder Methacrylsäure.

Ein weiteres Anwendungsgebiet für die nach dem erfindungsgemäßen Verfahren erhältlichen Homo- und Copolymerisate ist der Einsatz der Polymerisate in Waschmitteln. Sie werden darin als Inkrustierungsinhibitoren verwendet. Die Anwendungsmengen für diesen Einsatzzweck betragen 0,5 bis 10 Gew.%, bezogen auf das Waschmittel. Die Prozentangaben in den Beispielen sind Gew.%. Die K-Werte wurden nach H. Fikentscher, Cellulose Chemie, Band 13, 48-64 und 71 bis 74 (1932) in 1 gew.%iger wäßriger Lösung bei einer Temperatur von 25 °C und einem pH-Wert von 7,0 am Na-Salz der Polymerisate gemessen; dabei bedeutet $K = k \cdot 10^3$.

Die Uneinheitlichkeit der Polymerisate wurde durch Messung des Zahlenmittels ($M_n$) und Gewichtsmittels ($N_w$) durch Gelpermeationschromatographie bestimmt.

Für die folgenden Beispiele und Vergleichsbeispiele wurde ein 40 l-fassender Polymerisationskessel verwendet, der mit einem Wendelrührer, einem absteigenden Kühler, Zulaufvorrichtungen und für das Arbeiten unter Stickstoff ausgestattet war. In den Reaktor wurde durch eine Zulaufleitung kontinuierlich eine Mischung aus Monomerlösung, Initiator und Polymerisationsregler zugeführt. Durch eine andere Zulaufleitung wurde dem Reaktor eine wäßrige Alkali-Lauge zugeführt. Der Druck im Polymerisationsreaktor wurde durch ein im Anschluß an den absteigenden Kühler eingebautes Druckventil konstant gehalten. Die Beheizung der Vorrichtung erfolgte mit Hilfe eines wasserdampfbeheizten Druckwasserkreises. Zwischen Polymerisations reaktor und absteigendem Kühler ist ein Abscheider angeordnet, um eventuell durch den Stickstoffstrom bzw. das verdampfende Siedehilfsmittel mitgerissene Feststoffe abzuscheiden. Der Reaktor war zur Kontrolle der Reaktionstemperatur mit einer Temperaturmeßsonde ausgestattet, die in das pulverförmige Gut eintauchte.

Zum Austragen des gebildeten Polymerisates befand sich seitlich im oberen Drittel des Polymerisationskessels eine Austragsschnecke, die bei Erreichen einer bestimmten Menge an pulverförmigem Polymerisat im Kessel körniges Gut in einen der Austragsschnecke nachgeschalteten Auffangbehälter austrug. Die Menge des Polymerisats im Reaktionskessel wird durch kontinuierliche Fahrweise konstant gehalten. Der Auffangbehälter kann durch zwei Absperrorgane periodisch vom Polymerisationskessel abgekoppelt, entspannt und entleert werden. In der oben beschriebenen Vorrichtung wurden jeweils 20 kg eines granulierten, durch Sprühtrocknung eines Lösungspolymerisates der Acrylsäure hergestellten Pulvers mit einem Korndurchmesser von 2 bis 3 mm vorgelegt und unter intensiver Umwälzung auf die jeweils in den folgenden Beispielen angegebene Reaktionstemperatur erwärmt. Das Lösungspolymerisat wies dabei jeweils die Zusammensetzung auf, die auch das herzustellende Polymerisat haben sollte.

Beispiel 1

In einem statischen Mischer werden stündlich 5200 g Acrylsäure, 800 g Wasser, 270 g 2-Mercaptoethanol, 52 g Propionsäure und 960 g 50 %iges Wasserstoffperoxid kontinuierlich gemischt und sukzessive auf das bewegte Feststoffbett aus körnigem Polynatriumacrylat, das zuvor durch Sprühtrocknung und Granulierung aus einem Lösungspolymerisat hergestellt wurde, durch eine Einstoffdüse aufgesprüht. Gleichzeitig wird an einer anderen Stelle der Festbettoberfläche eine wäßrige Lösung von 2500 g Natriumhydroxid in 2500 g Wasser kontinuierlich pro Stunde auf das bewegte Feststoffbett aufgesprüht. Die Polymerisationstemperatur betrug 140 °C. Im Reaktor wurde ein Druck von 1,70 bar durch Aufpressen von Stickstoff eingestellt. Während der Polymerisation wurde der Pulverzustand der Reaktionsmischung aufrechterhalten und das zugeführte Wasser mit dem aus der Neutralisation freiwerdenden Wasser kontinuierlich abdestilliert. Die Kondensatmenge betrug 4500 g Wasser pro Stunde.

Durch die Austragsschnecke wurde eine Polymerisatmenge von 7000 g pro Stunde aus dem Polymerisationskessel in das Austragsgefäß ausgetragen, in dem es eine Stunde bei 140 °C und dem gleichen Druck von 1,70 bar gehalten wurde. Danach entspannte man das Gefäß langsam und trug das körnige Gut aus. Nach einer Polymerisationszeit von ca. 36 Stunden, entsprechend etwa 15 diskontinuierlichen Kesseldurchsätzen - untersuchte man das ausgeschleuste Polymerisat. Es hatte einen K-Wert von 37,7 und einen Quellkörpergehalt von weniger als 1 %. Das Polymerisat hatte eine Unheitlichkeit $M_w/M_n$ von 12,8 und besaß eine helle Farbe.

Vergleichsbeispiel 1

Das Beispiel 1 wurde mit der einzigen Ausnahme wiederholt, daß man die Polymerisation nunmehr in Abwesenheit von Propionsäure durchführte. Man erhielt auf diese Weise eine Polyacrylsäure mit einem K-Wert von 40,2, einem Restmonomerengehalt und einem Quellkörperanteil von jeweils weniger als 1 %. Die molekulare Uneinheitlichkeit $M_w/M_n$ war 15,6.

Beispiel 2

Beispiel 1 wurde mit der einzigen Ausnahme wiederholt, daß man jetzt die Propionsäuremenge auf 130 g pro Stunde erhöhte. Man erhielt auf diese Weise ein Polymerisat mit einem Quellkörpergehalt von unter 1 % und einem K-Wert von 36,1. Das Polymerisat hatte eine Uneinheitlichkeit $M_w/M_n$ von 12,2 und besaß eine helle Farbe.

Beispiel 3

Beispiel 1 wurde mit der Ausnahme wiederholt, daß man dem Reaktor jetzt stündlich 260 g Propionsäure zuführte. Man erhielt ein Polymerisat mit einem Quellkörpergehalt von weniger als 1 % und einem K-Wert von 35,0. Das Polymerisat hatte eine Uneinheitlichkeit $M_w/M_n$ von 10,5 und besaß eine helle Farbe.

Beispiel 4

Beispiel 1 wurde mit der einzigen Ausnahme wiederholt, daß man dem Polymerisationsreaktor jetzt stündlich 520 g Propionsäure zuführte. Man erhielt ein Polymerisat mit einem Quellkörpergehalt von weniger als 1 % und einem K-Wert von 34,5. Das Polymerisat hatte ein Uneinheitlichkeit $M_w/M_n$ von 10,7 und besaß eine helle Farbe.

Vergleichsbeispiel 2

Der im Beispiel 1 beschriebenen Apparatur wurden über einen statischen Mischer stündlich 5200 g Acrylsäure, 800 g Wasser, 388 g 2-Mercaptoethanol und 960 g 50 %iges Wasserstoffperoxid kontinuierlich zugeführt. Gleichzeitig wurde an einer anderen Stelle der Festbettoberfläche eine wäßrige Lösung von 2500 g Natriumhydroxid in 2500 g Wasser kontinuierlich pro Stunde auf das bewegte Feststoffbett aufgesprüht. Man erreichte einen Neutralisationsgrad der Polyacrylsäure von 85 %. Man erhielt eine Polyacrylsäure mit einem Quellkörpergehalt von weniger als 1 % und einem K-Wert von 40,1. Das Polymerisat hatte eine Uneinheitlichkeit $M_w/M_n$ von 15,4 und war gegenüber den nach den Beispielen 1 bis 4 hergestellten Polymerisaten deutlich gelb gefärbt.

Vergleichsbeispiel 3

Das Vergleichsbeispiele 2 wurde mit der Ausnahme wiederholt, daß man die Menge an 2-Mercaptoethanol auf stündlich 394 g, entsprechend 7 Mol.%, bezogen auf die eingesetzte Acrylsäure, erhöhte. Man erhielt eine Polyacrylsäure mit einem Quellkörpergehalt von weniger als 1 % und einem K-Wert von 39,9. Das Polymerisat hatte eine Uneinheitlichkeit $M_w/M_n$ von 15,4 und war noch stärker gelb gefärbt als das im Vergleichsbeispiel 2 hergestellte. Der erhöhte Einsatz von Mercaptoethanol führt außerdem zu einem Polymerisat mit einem stechenden Geruch.

Vergleichsbeispiel 4

Vergleichsbeispiel 1 wurde mit der Ausnahme wiederholt, daß man dem Polymerisationsreaktor zusammen mit den Monomeren stündlich noch 156 g Essigsäure zuführte. Man erhielt eine Polyacrylsäure mit einem Quellkörpergehalt von weniger als 1 % und einem K-Wert von 39,5. Das Polymerisat hatte eine Uneinheitlichkeit $M_w/M_n$ von 16,0 und war schwach gelb gefärbt.

Vergleichsbeispiel 5

Das Vergleichsbeispiel 4 wurde mit der Ausnahme wiederholt, daß man jetzt die Menge an Essigsäure auf 260 g pro Stunde steigerte. Man erhielt eine Polyacrylsäure mit einem Quellkörpergehalt von weniger als 1 % und einem K-Wert von 39,9. Das Polymerisathatte eine Uneinheitlichkeit $M_w/M_n$ von 15,1 und war schwach gelb gefärbt.

Beispiel 5

Das Beispiel 1 wird mit der Ausnahme wiederholt, daß man anstelle der dort verwendeten Propionsäure jetzt stündlich 130 g Ameisensäure der Polymerisationszone zuführte. Man erhielt ein Polymerisat mit einem Quellkörpergehalt von weniger als 1 % und einem K-Wert von 36,4. Die Polyacrylsäure hatte eine Uneinheitlichkeit $M_w/M_n$ von 11,8 und besaß eine helle Farbe.

Beispiel 6

Das Beispiel 5 wurde mit der Ausnahme wiederholt, daß man jetzt die Menge an Ameisensäure auf stündlich 260 g steigerte. Man erhielt eine Polyacrylsäure mit einem Quellkörpergehalt von weniger als 1 % und einem K-Wert von 34,8. Die Polyacrylsäure hatte eine Uneinheitlichkeit $M_w/M_n$ von 9,5 und war hell gefärbt.

Beispiel 7

Das Beispiel 1 wird wiederholt, jedoch führt man in Abänderung der dort gegebenen Vorschrift dem Polymerisationsreaktor nunmehr über den statischen Mischer stündlich 4900 g Acrylsäure, 130 g Propionsäure, 281 g Thioglykolsäure, 1100 g einer 25 %igen wäßrigen Lösung von Natriumvinylsulfonat und 360 g einer 50 %igen Lösung von Wasserstoffperoxid in Wasser als Monomerstrom zu. Gleichzeitig wird über die andere Dosierstelle eine wäßrige Lösung von 2080 g Natriumhydroxid in 2080 g Wasser kontinuierlich auf die Oberfläche des gerührten Pulverbetts aufgesprüht. Die übrigen Verfahrensmaßnahmen entsprechen den in Beispiel 1 gegebenen. Man erhielt auf diese Weise ein Copolymerisat aus Acrylsäure und Vinylsulfonat in Form des Natriumsalzes mit einem Quellkörpergehalt von weniger als 1 % und einem K-Wert von 36,0. Das Copolymerisat hatte eine Uneinheitlichkeit $M_w/M_n$ von 11,7 und besaß eine helle Farbe.

**Ansprüche**

1. Verfahren zur Herstellung von pulverförmigen Polymerisaten der Acrylsäure und Methacrylsäure durch Polymerisieren von

(a) 100 bis 70 Gew.% Acrylsäure, Methacrylsäure oder Mischungen aus Acrylsäure und Methacrylsäure und
(b) 0 bis 30 Gew.% einer Verbindung der Formel $CH_2 = CH-SO_3Me$, in der Me = H, Na, K, $NH_4$ bedeutet,

in einwertigen $C_1$- bis $C_8$-Alkoholen, Wasser oder Mischungen dieser Lösemittel in einem Pulverbett in Gegenwart von Polymerisationsinitiatoren und Reglern unter Aufrechterhaltung des Pulverzustands während der Polymerisation, Abführen der Polymerisationswärme durch Abdestillieren der Lösemittel und Umwälzung der Reaktionsmasse, dadurch gekennzeichnet, daß man als Regler, jeweils bezogen auf die bei der Polymerisation eingesetzten Monomeren, 0,5 bis 10 Mol.% einer Thiocarbonsäure und/oder eines Mercaptoalkohols und 0,05 bis 10 Mol.% Propionsäure und/oder Ameisensäure einsetzt.

2. Verfahren nach Anspruch 1, dadurch gekennzeichnet, daß die Säuregruppen der Monomeren zu 40 bis 95 % mit Alkalimetallbasen oder Ammoniak während der Polymerisation neutralisiert werden.

3. Verfahren nach einem der Ansprüche 1 oder 2, dadurch gekennzeichnet, daß man als Regler Thioglykolsäure oder 2-Mercaptoethanol und Propionsäure einsetzt.

4. Verwendung der nach dem Verfahren der Ansprüche 1 bis 3 hergestellten Polymerisate als Mahlhilfsmittel und/oder Dispergiermittel zur Herstellung wäßriger Anschlämmungen von Pigmenten für Papierstreichmassen.

5. Verwendung der nach dem Verfahren der Ansprüche 1 bis 3 hergestellten Polymerisate als Inkrustierungsinhibitoren in Waschmitteln.